# EUROPÄISCHE PATENTSCHRIFT

(11) **EP 2 239 471 B1**
(45) Veröffentlichungstag und Bekanntmachung des Hinweises auf die Patenterteilung: **04.05.2016**
(21) Anmeldenummer: 10003047.7
(22) Anmeldetag: 23.03.2010
(51) Int. Cl.: F16B 9/02

(54) **Funktionselement mit einer Befestigungsvorrichtung zur lösbaren Befestigung des Funktionselements**
Functional element with an attachment device for reversible attachment of the functional element
Elément de fonctionnement doté d'un dispositif de fixation destiné à la fixation mobile de l'élément de fonctionnement

(30) Priorität: 09.04.2009 DE 202009005368 U
(43) Veröffentlichungstag der Anmeldung: 13.10.2010
(73) Patentinhaber: Lindemann, Tim, 63500 Seligenstadt (DE)
(72) Erfinder: Lindemann, Tim, 63500 Seligenstadt (DE)
(74) Vertreter: Katscher Habermann Patentanwälte

(56) Entgegenhaltungen:
- EP-A2- 1 695 647
- DE-U1- 9 415 695
- US-A- 5 154 532

## Beschreibung

Die Erfindung betrifft ein Funktionselement mit einer Befestigungsvorrichtung zur lösbaren Befestigung des Funktionselements an einem ein Gewinde aufweisendes Verankerungselement, wobei die Befestigungsvorrichtung einen mit dem Gewinde des Verankerungselements in Eingriff bringbaren Zugbolzen mit einem Schaft und mit einem Kopfteil aufweist, wobei das Funktionselement drehbar an dem Kopfteil des Zugbolzens gelagert ist und dass das Kopfteil des Zugbolzens in axialer Richtung formschlüssig mit dem Funktionselement in Eingriff bringbar ist.

Aus der Praxis sind verschiedene Befestigungsvorrichtungen bekannt, die eine lösbare Befestigung eines Funktionselements wie beispielsweise eines Wandhakens oder eines Möbelgriffs an einer Platte oder Wand bzw. an einer Wandfläche ermöglichen.

Das Funktionselement kann beispielsweise einen angeformten Gewindebolzen aufweisen oder drehfest mit einem Gewindebolzen, bzw. Schraubenschaft verbunden sein. Es ist ebenfalls bekannt, dass das Funktionselement eine durchgehende Bohrung mit einer radial vorspringenden Anschlagsfläche zur Aufnahme einer Schraube aufweist, die zum Befestigen des Funktionselements in die Bohrung eingeführt werden kann. Der Gewindebolzen oder der Schraubenschaft kann dann in ein daran angepasstes Gewinde oder in einen in die Wandfläche eingelassenen Dübel eingeschraubt werden, um auf diese Weise das Funktionselement an der Wand festzulegen. Die in den Dübel bzw. in ein daran angepasstes Gewinde eingeschraubte Schraube stellt in diesem Fall ein Verankerungselement für die Befestigungsvorrichtung dar.

Allerdings muss das Funktionselement entweder zur Festlegung an der Wandfläche um eine zentrale Achse drehbar sein oder von einer der Wandfläche abgewandten Stirnseite einen Zugang zu der durchgehenden Bohrung ermöglichen, die zur Aufnahme und Befestigung der Befestigungsschraube in dem Verankerungselement vorgesehen ist.

Funktionselemente, die an zwei oder mehreren Stellen an einer Platte oder Wand befestigt werden sollen, können grundsätzlich nicht während des Befestigungsvorgangs verdreht werden, so dass beispielsweise für U-förmige Haltegriffe oder Funktionselemente mit zwei oder mehreren Befestigungssockeln nur solche Befestigungsvorrichtungen in Frage kommen, die keine Verdrehung des Funktionselements erfordern.

Ein Möbelgriff, der beispielsweise einen Griffsockel oder aber zwei beabstandet zueinander angeordnete Griffsockel aufweist, lässt sich beispielsweise an einer Frontplatte einer Schublade festlegen, ohne dass ein zugeordnetes Befestigungselement von außen sichtbar ist. Zu diesem Zweck weist jeder Griffsockel des Möbelgriffs eine Sackbohrung mit einem Innengewinde auf. Durch eine daran angepasste Bohrung in der Frontplatte der Schublade können von einer dem im Möbelgriff abgewandten Seite der Frontplatte aus Befestigungselemente mit vorspringenden Gewindestäben durch die Frontplatte hindurch in die Griffsockel eingedreht werden, bis die Befestigungselemente die Griffsockel fest an die Frontplatte anpressen und den Möbelgriff an der Frontplatte festlegen. Derartige Befestigungsvorrichtungen, die in unterschiedlicher Ausgestaltung aus der Praxis bekannt sind, können jedoch nur dann verwendet werden, wenn eine Rückseite einer Frontplatte oder dergleichen zur Festlegung des Funktionselements wie beispielsweise des Möbelgriffs zugänglich ist.

Aus der Praxis ist es ebenfalls bekannt, einen radial vorspringenden Befestigungsflansch mit zwei oder drei konzentrisch um eine Mittelachse angeordneten Schrauben oder ähnlichen Befestigungsmitteln an einer Wandfläche festzulegen, um anschließend ein beliebiges Funktionselement an einer mittig vorspringenden Ausformung des Befestigungsflanschs befestigen zu können. Die Verwendung derartiger Befestigungsflansche, die gegebenenfalls auch einstückig an dem zu befestigenden Funktionselement angeformt sein können, erhöht jedoch den zur Festlegung des Funktionselements erforderlichen Raumbedarf. Die für die Befestigung notwendigen mehreren Schrauben oder Befestigungsmittel erhöhen den Montageaufwand und beeinträchtigen oftmals trotz Abdeckung die optische Gestaltung des Funktionselements. Zudem müssen die in dem Befestigungsflansch konzentrisch angeordneten, längs einer Umfangslinie beabstandeten Befestigungsschrauben zugänglich sein und zum Festlegen des Funktionselements in die zugeordneten Dübel oder dergleichen eingedreht werden können. Derartige Befestigungsvorrichtungen sind beispielsweise im Zusammenhang mit stabförmigen Handtuch- oder Toilettenpapierhalterungen oder zur Befestigung von Haltegriffen im Sanitärbereich bekannt.

Aus US 5,154,532 ist eine Kupplung für zwei Wellen bekannt, bei der die Enden der zu verbindenden Wellen in einer Befestigungshülse festgelegt sind. Die Befestigungshülse umgreift ein Ende einer Welle und steht mit einem Ende der anderen Welle in einem Gewindeeingriff. Um die beiden Wellen drehfest in der Befestigungshülse miteinander verbinden zu können muss die Welle mit dem Gewindeabschnitt in die Befestigungshülse eingedreht werden.

Beispielsweise aus EP 1 695 647 A2 ist eine Befestigungsvorrichtung für Funktionselemente bekannt, die einen mit dem Verankerungselement über eine innenliegende Befestigungshülse in Eingriff bringbaren Zugbolzen mit einem Schaft und mit einem Kopfteil aufweist, wobei das Kopfteil des Zugbolzens in axialer Richtung mit dem Funktionselement in Eingriff bringbar ist. Das Funktionselement wird dabei jedoch nachträglich mit Hilfe einer zusätzlichen Madenschraube drehfest an dem Verankerungselement gelagert.

Beispielsweise aus der gattungsbildenden DE 94 15 695 U1 ist eine Befestigungsvorrichtung für Funktionselemente bekannt, bei der das Funktionselement drehbar an dem Kopfteil eines kappenförmigen Befestigungselements gelagert ist und das Befestigungselement mit einem Gewinde des Verankerungselements in Eingriff ist. Um das Funktionselement an dem Verankerungselement festlegen zu können muss zunächst das kappenförmige Befestigungselement an dem Verankerungselement festgelegt und anschließend das Funktionselement auf das Befestigungselement aufgeschoben werden.

Es wird als Aufgabe der vorliegenden Erfindung angesehen, eine Befestigungsvorrichtung für Funktionselemente so auszugestalten, das eine lösbare Befestigung eines Funktionselements an einem Verankerungselement wie beispielsweise an einem vorspringenden Gewindebolzen in einfacher Weise ermöglicht wird. Das Funktionselement soll rasch und zuverlässig befestigbar sein, ohne dass das Funktionselement während des Befestigungsvorgangs verdreht oder verschwenkt werden muss.

Diese Aufgabe wird erfindungsgemäß dadurch gelöst, dass die Befestigungsvorrichtung eine drehfest an dem Schaft des Zugbolzens gelagerte Montagehülse aufweist.

Als Funktionselement wird im Folgenden jedweder Gegenstand verstanden und bezeichnet, der für eine Befestigung an einem Verankerungselement bzw. an einem dafür vorgesehenen Ort vorgesehen und geeignet ist. Des Weiteren wird jeder Gegenstand oder jede Formgebung als Verankerungselement aufgefasst und bezeichnet, der bzw. die ein Gewinde aufweisen kann und dazu geeignet ist, mit einem anderen Gegenstand, bzw. mit einem Funktionselement verbunden zu werden. Dabei kann es sich bei dem Funktionselement und dem Verankerungselement auch um mehrere Bauteile oder um zwei im Wesentlichen identisch übereinstimmende Elemente eines mehrteiligen Gebildes handeln. Die Bezeichnungen Funktionselement und Verankerungselement beziehen sich demzufolge vor allem auf die jeweilige Rolle des so bezeichneten Elements im Verhältnis zu der Befestigungsvorrichtung.

Das Verankerungselement weist häufig einen in Richtung der Befestigungsvorrichtung vorspringenden Gewindestab mit einem Außengewinde auf. Der Zugbolzen der Befestigungsvorrichtung kann dann zweckmäßigerweise eine in axialer Richtung verlaufende Sackbohrung mit einem Innengewinde aufweisen, welches an das Außengewinde des Gewindestabs des Verankerungselements angepasst ist. Durch ein Verdrehen des Zugbolzens relativ zu dem verdrehsicher verankerten Gewindestab des Verankerungselements wird der Zugbolzen in axialer Richtung längs des Gewindestabs relativ zu dem Verankerungselement verlagert. Es ist natürlich ebenfalls möglich, dass der Zugbolzen und nicht das Verankerungselement einen vorspringenden Gewindeabschnitt aufweist, der mit einem daran angepassten Gewindeabschnitt innerhalb des Verankerungselements in Eingriff bringbar ist und auf diese Weise die Befestigungsvorrichtung in, bzw. an dem Verankerungselement festgelegt werden kann.

Der Zugbolzen ist mit seinem Kopfteil mit dem Funktionselement in Eingriff bringbar, so dass eine axiale Verlagerung des Zugbolzens eine entsprechende axiale Verlagerung des Funktionselements bewirkt. Der Zugbolzen ist in dem Funktionselement jedoch frei drehbar, so dass ein Verdrehen des Zugbolzens nicht notwendigerweise zu einer entsprechenden Drehbewegung des Funktionselements führen muss. Insbesondere kann das Funktionselement durch mehrere, beabstandet zueinander angeordnete Befestigungsvorrichtungen beispielsweise an einer Wandfläche festgelegt werden, da keine Drehbewegung des Funktionselements relativ zu jeder einzelnen Befestigungsvorrichtung erforderlich ist.

Ein Verdrehen des Zugbolzens wird durch die drehfest an dem Schaft des Zugbolzens gelagerte Montagehülse erleichtert. Die Montagehülse ist zweckmäßigerweise axial verschiebbar an dem Zugbolzen gelagert, so dass ein Verdrehen der Montagehülse eine axialen Verlagerung des drehfest mit der Montagehülse in Eingriff stehenden Zugbolzens bewirkt, ohne dass eine entsprechende axiale Verlagerung der Montagehülse erforderlich wird.

Die Montagehülse kann längs einer Außenfläche abgeflachte Bereiche oder vorspringende Ausformungen aufweisen, um ein Verdrehen der Montagehülse zu erleichtern. Es kann auch vorgesehen sein, dass die Außenfläche der Montagehülse eine Formgebung aufweist, die eine Verwendung eines Werkzeugs wie beispielsweise eines Schraubenschlüssels oder einer Rohrzange ermöglicht, bzw. erleichtert.

Die Montagehülse kann bezüglich Ihrer Abmessungen und Formgebung an das daran anschließende Funktionselement angepasst sein, so dass die Befestigungsvorrichtung kaum wahrnehmbar ist und eine optisch ansprechend ausgestaltete Befestigung des Funktionselements beispielsweise an einer Wandfläche bewirkt werden kann.

Vorzugsweise ist vorgesehen, dass die Montagehülse in axialer Richtung länger als ein aus dem Funktionselement herausragender Abschnitt des Schafts des Zugbolzens ist. Durch ein Verdrehen und axiales Verlagern des Zugbolzens wird das Funktionselement während eines Befestigungsvorgangs in Richtung einer Anschlagsfläche bewegt, die entweder von dem Verankerungselement oder von der Wandfläche um das Verankerungselement herum gebildet wird. Wenn die Montagehülse in vorteilhafter Weise etwas länger als der aus dem Funktionselement herausragende Abschnitt des Schafts des Zugbolzens ist, so wird zuerst das Funktionselement über die Montagehülse fest an die Anschlagsfläche gepresst, bevor eine Stirnseite des Schafts des Zugbolzens die Anschlagsfläche berühren kann. Aufgrund der üblicherweise größeren Oberfläche einer der Anschlagsfläche zugewandten Stirnseite der Montagehülse und insbesondere aufgrund des größeren radialen Abstands der Montagehülse lässt sich auf diese Weise eine zuverlässige Festlegung des Funktionselements eines Zugbolzens an dem Verankerungselement erreichen.

Um die Montagehülse drehfest, jedoch in axialer Richtung beliebig verschiebbar an dem Schaft des Zugbolzens lagern zu können ist vorgesehen, dass die Montagehülse mindestens eine in radialer Richtung zum Schaft hin vorspringende Ausformung aufweist und dass der Schaft mindestens eine an die vorspringende Ausformung der Montagehülse angepasste Ausnehmung aufweist. Es ist natürlich ebenfalls denkbar, dass der Schaft des Zugbolzens eine radial nach außen vorspringende Ausformung aufweist und dass die Montagehülse eine daran angepasste, in axialer Richtung verlaufende Ausnehmung, beispielsweise eine Längsnut aufweist. So kann beispielsweise der Schaft des Zugbolzens im Wesentlichen zylinderförmig ausgestaltet sein und längs des aus dem Funktionselement herausragenden Abschnitts eine im Wesentlichen ebene Abflachung aufweisen, während die Montagehülse eine an den Schaft angepasste zylinderförmige Ausnehmung mit einer Ausformung aufweist, die eine im Wesentlichen ebene, an die Abflachung des Schafts angepasste Anschlagfläche aufweist.

Es ist ebenfalls denkbar, dass der Schaft des Zugbolzens keine kreisrunde Querschnittsfläche, sondern eine Querschnittsfläche mit einer oder mehreren Ecken aufweist und dass die Ausnehmung in der Montagehülse an die Umfangsfläche des Schafts des Zugbolzens angepasst ist. Die Querschnittsfläche des Schafts des Zugbolzens kann beispielsweise dreieckig, viereckig oder sechseckig sein.

Gemäß einer Ausgestaltung des Erfindungsgedankens ist vorgesehen, dass der Schaft des Zugbolzens eine näherungsweise sternförmige Querschnittsfläche hat und längs einer Umfangslinie mehrere radial nach außen sowie nach innen vorspringende nutenförmige, bzw. stegförmige Ausformungen aufweist. Die umgebende Montagehülse weist daran angepasste Ausformungen auf, so dass längs der Umfangslinie jeweils mehrere Ausformungen des Schafts des Zugbolzens mit der Montagehülse in Eingriff stehen und eine Drehbewegung der Montagehülse auf den Zugbolzen übertragen. Der Schaft des Zugbolzens kann dabei eine kleinere Querschnittsfläche als der in der Montagehülse ausgebildete Hohlraum für den Schaft des Zugbolzens aufweisen, so dass der Zugbolzen mit merklichem Spiel von der Montagehülse umgeben ist. Auf diese Weise kann erforderlichenfalls ein geringfügiger seitlicher Versatz des Verankerungselements relativ zu der vorgesehenen Anordnung des Funktionselements ausgeglichen werden.

Gemäß einer vorteilhaften Ausgestaltung des Erfindungsgedankens ist vorgesehen, dass der Zugbolzen eine Sackbohrung mit einem Innengewinde aufweist, das an die Abmessungen eines Außengewindes eines vorspringenden Gewindestabs des Verankerungselements angepasst ist. Bei einer Befestigung des Funktionselements an einer Wandfläche oder dergleichen kann das Verankerungselement beispielsweise eine Stockschraube sein.

Die Anordnung des Außengewindes, beziehungsweise des damit in Eingriff bringbaren Innengenwindes ist dabei austauschbar, so dass auch der Zugbolzen einen vorspringenden Gewindestab mit einem Außengewinde aufweisen könnte, der in eine daran angepasste Sackbohrung des Verankerungselements mit einem Innengewinde eingedreht werden kann. Es ist ebenfalls denkbar, dass das Verankerungselement oder der Zugbolzen eine vorspringende Hülse mit einem Innengewinde oder/und einem Außengewinde aufweist, während der zugeordnete Zugbolzen, beziehungsweise das zugeordnete Verankerungselement eine daran angepasste ringförmige Ausnehmung mit einem an das Gewinde angepassten Außen-, beziehungsweise Innengewinde aufweist.

Um eine zuverlässige Festlegung des Funktionselements an dem Kopfteil des Zugbolzens zu ermöglichen ist vorgesehen, dass das Kopfteil des Zugbolzens einen in Umfangsrichtung verlaufenden, radial vorspringenden Federring aufweist, der mit einer daran angepassten ringförmigen Nut des Funktionselements in Eingriff bringbar ist. Der Zugbolzen und das Funktionselement können getrennt voneinander hergestellt und mit Hilfe eines Federrings in einfacher Weise miteinander verbunden werden. Der radial vorspringende Federring bildet einen formschlüssigen Eingriff des Zugbolzens mit dem Funktionselement, der eine Relativbewegung in axialer Richtung verhindert, während das Funktionselement frei drehbar um den Zugbolzen an diesem gelagert ist.

Anstelle eines radial vorspringenden Federrings kann das Kopfteil des Zugbolzens radial vorspringende, längs eines Umfangs beabstandet angeordnete Rastelemente und das Funktionselement daran angepasste Ausnehmungen aufweisen.

Es ist ebenfalls denkbar, dass das Kopfteil des Zugbolzens eine in Umfangsrichtung verlaufende, radial vorspringende Ausformung und das Funktionselement eine daran angepasste, ringförmige Nut oder Ausnehmung aufweist. Die radial vorspringende Ausformung kann beispielsweise durch einen Kaltverformungsvorgang erzeugt werden und den Zugbolzen dauerhaft und unlösbar in dem Funktionselement festlegen.

Es ist ebenfalls möglich, dass das Kopfteil des Zugbolzens mehrere Ausformungen aufweist, die mittels eines axial verlagerbaren Konus radial verlagerbar sind. Die Ausformungen können beispielsweise zungenförmig oder keilförmig in axialer Richtung an dem Kopfteil des Zugbolzens abstehen. Durch einen axial verlagerbaren Konus können die zungen- oder keilförmigen Ausformungen zum Festlegen des Funktionselements an dem Zugbolzen nach außen gepresst und im Bedarfsfall durch eine entgegengesetzt gerichtete Verlagerung des Konus wieder in die ursprüngliche Ausgangslage verlagert werden, um dadurch den Zugbolzen von dem Funktionselement wieder lösen zu können.

In besonders vorteilhafter Weise ist vorgesehen, dass die radial verlagerbaren Ausformungen kraftschlüssig oder formschlüssig mit einem daran angepassten hülsenförmigen Abschnitt des Funktionselements verbindbar sind. Das Funktionselement kann beispielsweise einen röhrenförmigen, bzw. hülsenförmigen Endabschnitt aufweisen, der hinsichtlich des Durchmessers an das Kopfteil des Zugbolzens angepasst ist und auf das Kopfteil des Zugbolzens aufgeschoben werden kann. Durch eine Verlagerung des Konus relativ zu dem Kopfteil des Zugbolzens werden die zungen- oder keilförmigen Ausformungen nach außen und damit an eine Innenfläche des röhrenförmigen Endabschnitts gepresst, wodurch das Funktionselement an dem Zugbolzen festgelegt wird. Die Ausformungen können zusätzlich Rastelemente oder beispielsweise eine gezahnte Außenfläche aufweisen, die eine zuverlässige und mechanisch belastbare Befestigung des Funktionselements an dem Zugbolzen erleichtern.

Es ist ebenfalls denkbar und im Hinblick auf eine kostengünstige Herstellung und Montage der Befestigungsvorrichtung zweckmäßig, dass das Funktionselement eine im Wesentlichen zylinderförmige Ausnehmung zur Aufnahme des Kopfteils des Zugbolzens aufweist und ein radial vorspringender Bereich des Kopfteils des Zugbolzens mit einem nachträglich in der zylinderförmigen Ausnehmung festlegbaren, hülsenförmigen Rückhalteelement in Eingriff bringbar ist.

Die Ausnehmung zur Aufnahme des Zugbolzens kann auch einen sich zum Schaft des Zugbolzens erweiternde Querschnittsfläche und damit beispielsweise eine konische Formgebung aufweisen, so dass der aus dem Funktionselement herausragende Abschnitt des Zugbolzens verschwenkt werden kann, um einen gegebenenfalls unbeabsichtigten Winkel zwischen dem Verankerungselement und der vorgesehenen Ausrichtung des Funktionselements ausgleichen zu können. Durch eine geeignete Ausgestaltung des Zugbolzens und der Ausnehmung in dem Funktionselement insbesondere im Bereich des Kopfteils des Zugbolzens kann auch ein Ausgleich eines gegebenenfalls auftretenden seitlichen Versatzes zwischen dem Verankerungselement und dem Funktionselement ermöglicht werden. Auch bei einer derartigen Ausgestaltung der Ausnehmung kann die Ausnehmung einen im Wesentlichen zylinderförmigen Abschnitt mit einem Gewinde zum Festlegen eines Rückhalteelements aufweisen. Ein geeignetes Rückhalteelement kann beispielsweise eine Mutter mit einem Außengewinde sein.

Gemäß einer besonders vorteilhaften Ausgestaltung des Erfindungsgedankens ist vorgesehen, dass das Funktionselement ein mit dem Zugbolzen in Eingriff bringbares Kupplungsteil und einen mit dem Kupplungsteil verbindbaren Funktions-Grundkörper aufweist. Das über dem Zugbolzen mit dem Verankerungselement befestigte Kupplungsteil kann, sofern dies für einzelne Verwendungsmöglichkeiten von Vorteil ist, seinerseits lösbar kraftschlüssig oder formschlüssig mit einem gegebenenfalls rasch auswechselbaren Funktions-Grundkörper verbunden werden. Je nach der vorgesehenen bzw. üblicherweise zu erwartenden mechanischen Beanspruchung kann der Funktions-Grundkörper auf das Kupplungsteil aufgesteckt, aufgeschraubt oder zusätzlich mit einem geeigneten Klebemittel oder dergleichen befestigt werden.

Eine vielseitige Verwendung der Befestigungsvorrichtung zur Befestigung des Funktionselements an beispielsweise schrägen Wandflächen etc. wird dadurch ermöglicht, dass der Funktions-Grundkörper schwenkbar an dem Kupplungsteil gelagert ist. Dabei kann ein Schwenk- oder Rotationsgelenk mit einem Freiheitsgrad verwendet werden, so dass der Funktions-Grundkörper lediglich um eine vorgegebene Schwenkachse relativ zu dem Kupplungsteil verschwenkt werden kann. Es ist ebenfalls denkbar, dass ein Kugelgelenk oder dergleichen verwendet wird, so dass ein räumliches Verschwenken des Funktions-Grundkörpers relativ zu dem Kupplungsteil ermöglicht wird.

Um beispielsweise einen Längenausgleich vornehmen zu können und dadurch einen variablen Abstand des Funktionselements, bzw. des Funktions-Grundkörpers relativ zu dem Verankerungselement zu ermöglichen ist vorgesehen, dass der Funktions-Grundkörper in axialer Richtung relativ zu dem Kupplungsteil verlagerbar ist. Der Funktions-Grundkörper kann beispielsweise über ein Schraubgewinde mit dem Kupplungsteil in Eingriff stehen, so dass durch ein Verdrehen des Funktions-Grundkörpers relativ zu dem Kupplungsteil auch eine Verlagerung in Längsrichtung bewirkt wird. Auf diese Weise können bauseitig vorgegebene Toleranzen und Abweichungen berücksichtigt und insbesondere bei einer Befestigung eines Funktionselements mit mehreren beabstandet angeordneten Befestigungsvorrichtungen ein in der Praxis oftmals unvermeidlicher Versatz einzelner Verankerungselemente ausgeglichen werden.

Es ist ebenfalls denkbar, dass der Funktions-Grundkörper über Führungselemente geführt oder auch völlig ohne Formschluss relativ zu dem Kupplungsteil axial verlagert werden und beispielsweise klemmend in der vorgesehenen Position an dem Kupplungsteil festgelegt werden kann. Die Klemmkraft kann gemäß einer Ausgestaltung des Erfindungsgedankens durch das Anziehen des Zugbolzens über einen Eingriff des Kopfteils des Zugbolzens mit einem Klemmkörper bewirkt werden, wobei der Klemmkörper die axial gerichtete Zugkraft teilweise in eine radial gerichtete Klemmkraft umwandelt und einen dafür vorgesehenen Abschnitt oder Bereich des Kupplungsteils an den Funktions-Grundkörper presst und dadurch klemmend festlegt.

Um radial auf das Funktionselement und die Befestigungsvorrichtung einwirkende Kräfte besser aufnehmen und in die Wandfläche mit dem darin angeordneten Verankerungselement übertragen zu können ist vorgesehen, dass die Befestigungsvorrichtung an einem dem Funktionselement abgewandten Endbereich einen radial vorspringenden Anschlagsflansch aufweist. Der Anschlagsflansch kann einstückig an der Montagehülse ausgeformt sein. Es ist ebenfalls möglich, dass der Anschlagsflansch lediglich im Bedarfsfall beispielsweise auf die Montagehülse aufgeschoben oder vor dem Anbringen und Festlegen der Befestigungsvorrichtung an dem Verankerungselement auf das Verankerungselement aufgeschoben und zwischen der Wandfläche und der Montagehülse angeordnet wird.

Die Befestigungsvorrichtung kann je nach Verwendungszweck und Einsatzgebiet aus einem geeigneten, mechanisch ausreichend belastbaren Material hergestellt werden. Neben geeigneten hochfesten Kunststoffmaterialien können dabei insbesondere zerspanbare Materialien wie beispielsweise Aluminium, Stahl oder Edelstahl (VA-Stahl) insbesondere für die Herstellung des Zugbolzens und der Montagehülse sowie des Funktionselements verwendet werden.

Nachfolgend werden Ausführungsbeispiele des Erfindungsgedankens näher erläutert, die in der Zeichnung dargestellt sind. Es zeigt:
Fig. 1 eine in axialer Richtung geschnittene Darstellung einer Befestigungsvorrichtung mit einem Zugbolzen und mit einer Montagehülse sowie mit einem an dem Zugbolzen festgelegten Funktionselement,
Fig. 2 eine radiale Schnittansicht der in Fig. 1 dargestellten Befestigungsvorrichtung längs der Linie II-II,
Fig. 3 die in den Fig. 1 und Fig. 2 dargestellte Befestigungsvorrichtung in einer Zwischenposition während eines Befestigungsvorgangs an einem Verankerungselement, das in einer Wand verankert ist,
Fig. 4 das in Fig. 3 dargestellte Befestigungselement in einer Endposition, in der die Befestigungsvorrichtung mit großem Anpressdruck an die Wandfläche gepresst und dadurch an dem Verankerungselement festgelegt ist,
Fig. 5 eine abweichend ausgestaltete Befestigungsvorrichtung mit einem daran angepassten Funktionselement, wobei der der Zugbolzen eine radial vorspringende Ausformung aufweist, die mit einer daran angepassten ringförmigen Umfangsnut in dem Funktionselement in Eingriff steht,
Fig. 6 eine wiederum abweichend ausgestaltete Ausführungsform der Befestigungsvorrichtung und des Funktionselements mit seitlichen Ausformungen des Zugbolzens, die mittels eines axial verlagerbaren Innenkonus radial nach außen gepresst und gebogen werden können,
Fig. 7 die in Fig. 6 abgebildete Befestigungsvorrichtung, bei der der Innenkonus axial verlagert wurde und dadurch radial vorspringenden Ausformungen nach außen gebogen und in Eingriff mit einer daran angepassten Ausnehmung des Funktionselements gebracht wurden,
Fig. 8 einen Endbereich eines Kupplungsteils eines Funktionselements gemäß den Fig. 1 bis 7 mit einem daran angepassten aufsteckbaren Funktions-Grundkörper,
Fig. 9 ein abweichend ausgestaltetes Kupplungsteil mit einem ebenfalls daran angepassten Funktions-Grundkörper,
Fig. 10 ein wiederum abweichend ausgestaltetes Kupplungsteil mit einem damit verschraubbaren Funktions-Grundkörper,
Fig. 11 eine teilweise in axialer Richtung geschnittene Darstellung einer Befestigungsvorrichtung mit einer Montagehülse, die an einem dem Funktionselement abgewandten Endbereich einen einstückig ausgeformten Anschlagsflansch aufweist,
Fig. 12 eine Befestigungsvorrichtung, die einen auf einer dem Funktionselement abgewandten Seite der Montagehülse einen lose aufsteckbaren Anschlagsflansch aufweist,
Fig. 13 eine abweichend ausgestaltete Befestigungsvorrichtung, bei der ein hülsenförmiger Endbereich des Funktionselements kraftschlüssig an dem Zugbolzen festlegbar ist,
Fig. 14 die in Fig. 13 dargestellte Befestigungsvorrichtung, bei der das Funktionselement durch eine Verlagerung eines Innenkonus an dem Kopfteil des Zugbolzens festgelegt ist,
Fig. 15 eine abweichend ausgestaltete Befestigungsvorrichtung mit einem sternförmigen Schaft des Zugbolzens,
Fig. 16 eine Befestigungsvorrichtung mit einem als Haltering ausgestalteten Funktionselement,
Fig. 17 eine Ausgestaltung des Befestigungselements und des Funktionselements, die über eine Quetschverbindung miteinander in Eingriff stehen,
Fig. 18 eine teilweise geschnitten dargestellte Draufsicht auf ein Funktionselement mit einem Kupplungsteil und einem schwenkbar gelagerten Funktions-Grundkörper,
Fig. 19 eine Schnittansicht durch das in Fig. 18 dargestellte Funktionselement mit dem Befestigungselement längs einer Linie XIX-XIX in Fig. 18,
Fig. 20 eine teilweise geschnitten dargestellte Ansicht eines räumlich schwenkbar an einem Kupplungsteil gelagerten Funktions-Grundkörper,
Fig. 21 eine teilweise geschnitten dargestellte Seitenansicht eines Funktionselements mit einer zylinderförmigen Ausnehmung zur Aufnahme des Zugbolzens,
Fig. 22 eine Abbildung des in Fig. 21 dargestellten Funktionselements in auseinandergezogener Darstellung,
Fig. 23 eine Ansicht des in Fig. 22 dargestellten Rückhalteelements aus einem anderen Blickwinkel,
Fig. 24 eine teilweise geschnitten dargestellte Seitenansicht eines Funktionselements mit einer sich konusförmig erweiternden Ausnehmung zur Aufnahme des Zugbolzens in auseinandergezogener Darstellung,
Fig. 25 eine Seitenansicht des in Fig. 24 dargestellten Funktionselements mit dem darin aufgenommenen, geringfügig schwenkbaren Zugbolzen in verschiedenen Positionen,
Fig. 26 eine teilweise geschnitten dargestellte Abbildung einer Verwendung von zwei miteinander kombinierten Funktionselementen und Befestigungsvorrichtungen als Geländerpfosten,
Fig. 27 eine Ansicht eines Übergangs einer Befestigungsvorrichtung über ein Anschlagselement in einen schräg angeordneten Handlauf des Geländers,
Fig. 28 eine teilweise geschnitten dargestellte Abbildung eines Funktionselements, bei dem der Funktions-Grundkörper axial relativ zu dem Kupplungsteil verlagerbar ist, und
Fig. 29 eine teilweise geschnitten dargestellte Abbildung eines ähnlich zu der Ausführungsform in Fig. 28 ausgestalteten Funktionselements, wobei das als längenverstellbare Halterung ausgebildete Funktionselement über ein weiteres Funktionselement und eine weitere Befestigungsvorrichtung an einer schrägen Deckenfläche festgelegt ist.

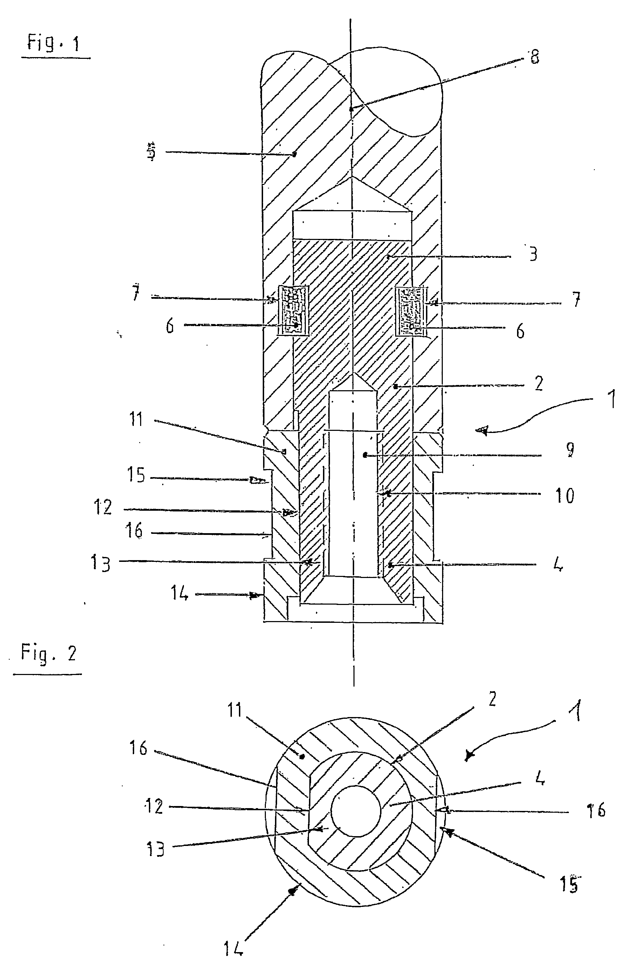

Die in Fig. 1 und Fig. 2 exemplarisch abgebildete Befestigungsvorrichtung 1 weist einen Zugbolzen 2 mit einem Kopfteil 3 und mit einem Schaft 4 auf. An dem Kopfteil 3 ist ein das Kopfteil 3 des Zugbolzens 2 umgreifendes Funktionselement 5 angeordnet. Das lediglich teilweise dargestellte Funktionselement 5 ist mittels eines in Umfangsrichtung um das Kopfteil 3 des Zugbolzens 2 angeordneten Federrings 6 in axialer Richtung an dem Kopfteil des Zugbolzens 2 festgelegt. Der radial vorspringende Federring 6 steht mit einer daran angepassten ringförmigen Nut 7 in dem Funktionselement 5 in Eingriff. Eine Drehbewegung des Zugbolzens 2 innerhalb des Funktionselements 5 um eine Drehachse 8 des Zugbolzens 2 ist nahezu ungehindert möglich.

Der Schaft 4 des Zugbolzens 2 weist an einer dem Funktionselement 5 abgewandten Seite eine Sackbohrung 9 mit einem Innengewinde 10 auf.

An einer Außenseite des Schafts 4 des Zugbolzens 2 ist axial verschiebbar und drehfest eine den Schaft 4 umgebende Montagehülse 11 angeordnet. Der im Wesentlichen zylinderförmig ausgestaltete Schaft 4 weist im Bereich der Montagehülse 11 eine parallel zu der Drehachse 8 verlaufende, im Wesentlichen ebene Abflachung 12 auf. Die ihrerseits näherungsweise ringförmige ausgestaltete Montagehülse 11 weist eine an die Abflachung 12 des Schafts 4 angepasste, im Wesentlichen ebene, nach innen vorspringende Anschlagsfläche 13 auf. Die Montagehülse 11 kann dadurch in axialer Richtung längs des Schafts 4 ungehindert verschoben werden, während eine von außen der Montagehülse 11 aufgezwungene Drehbewegung über den Eingriff der Anschlagsfläche 13 mit der Abflachung 12 auf den Zugbolzen 2 übertragen werden kann. Da das Funktionselement 5 frei drehbar um den Zugbolzen 2 an diesem festgelegt ist, kann eine Drehbewegung des Zugbolzens 2 auch bei einem nicht mit drehenden Funktionselement 5 durchgeführt werden.

Die Montagehülse 11 kann beispielsweise mit Hilfe eines Schraubenschlüssels oder einer Zange in Drehbewegung versetzt werden. Um die Verwendung derartiger Werkzeuge zur Erzeugung einer Drehbewegung der Montagehülse 11 und damit des Zugbolzens 2 zu erleichtern, weist die Montagehülse 11 an ihrer Außenfläche 14 Ausnehmungen 15 mit ebenen Anschlagsflächen 16 auf (Fig. 2), die ein sicheres Ergreifen und Verdrehen der Montagehülse 11 mit einem geeigneten Werkzeug erleichtern.

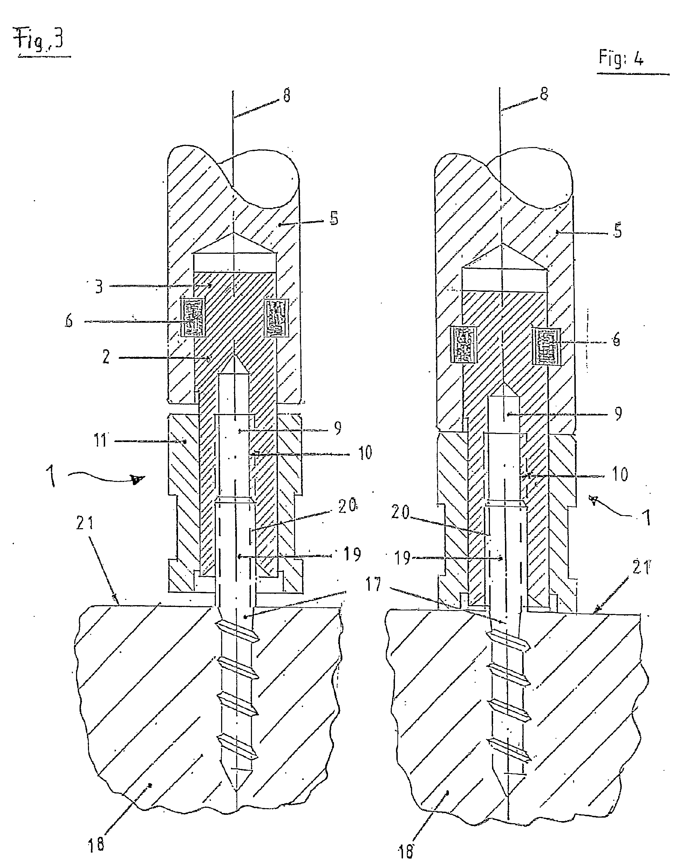

In den Fig. 3 und 4 ist die in den Fig. 1 und 2 abgebildete Befestigungsvorrichtung 1 in zwei unterschiedlichen Positionen während eines Befestigungsvorgangs an einem Verankerungselement 17 dargestellt, das seinerseits in einer Wand 18 verankert ist. Das Verankerungselement 17 weist einen Gewindestab 19 mit einem Außengewinde 20 auf, der senkrecht zu einer Wandaußenfläche 21 aus der Wand 18 herausragt.

In Fig. 3 ist die Befestigungsvorrichtung 1 in einem noch nicht vollständig befestigten Zustand abgebildet. Der Zugbolzen 2 befindet sich mit dem Innengewinde 10 bereits in Eingriff mit dem Außengewinde 20 des Gewindestabs 19 des Verankerungselements 17. Die Befestigungsvorrichtung 1 weist allerdings noch einen Abstand zu der Wandaußenfläche 21 auf, so dass die Montagehülse 11, die zwischen der Wandaußenfläche 21 der Wand 18 und dem an dem Kopfteil 3 des Zugbolzens 2 festgelegten Funktionselement 5 angeordnet ist, noch ein Spiel aufweist und zwischen der Wandaußenfläche 21 und dem Funktionselement 5 auf dem Schaft 4 des Zugbolzens 2 verschoben werden kann.

Indem auf die Montagehülse 11 beispielsweise mittels eines geeigneten Werkzeugs eine Drehbewegung übertragen wird, wird eine entsprechende Verdrehung des Zugbolzens 2 und damit ein Eindrehen des Zugbolzens 2 auf den Gewindestab 19 des Verankerungselements 17 bewirkt, wodurch sich der Zugbolzen 2 zunehmend in Richtung der Wandaußenfläche 21 der Wand 18 verlagert. Die Montagehülse 11 lässt sich so lange drehen, bis der Zugbolzen 2 und das mit dem Zugbolzen 2 in Eingriff stehende Funktionselement 5 so weit in Richtung auf die Wandaußenfläche 21 zubewegt haben, dass die Montagehülse 11 von dem Funktionselement 5 fest an die Wandaußenfläche 21 angepresst wird und eine weitere axiale Verlagerung des Zugbolzens 2 verhindert.

Durch eine geeignete Ausgestaltung des Innengewindes 10 und des daran angepassten Außengewindes 20 kann eine selbsthemmende Wirkung erzeugt werden, so dass eine selbsttätige gegenläufige Drehbewegung der Montagehülse 11 und ein dadurch bewirktes unbeabsichtigtes Lösen der Befestigungsvorrichtung 1 von dem Verankerungselement 17 bzw. von der Wand 18 im Wesentlichen ausgeschlossen werden kann.

Um die Befestigungsvorrichtung 1 gegebenenfalls wieder von dem Verankerungselement 17 zu lösen, muss die Montagehülse 11 in entgegengesetzter Richtung verdreht werden, wobei ein Drehmoment auf die Montagehülse 11 ausgeübt werden muss, welches im Wesentlichen mindestens gleich dem während des Befestigens der Befestigungsvorrichtung 1 ausgeübten Drehmoments sein muss. Die in entgegengesetzter Richtung verdrehte Montagehülse 11 überträgt die Drehbewegung auf den Zugbolzen 2, der dadurch von dem Gewindestab 19 losgeschraubt wird, bis die Befestigungsvorrichtung 1 von dem Gewindestab 19 und damit von dem Verankerungselement 17 gelöst werden kann, das in der Wand 18 festgelegt bzw. Verankert ist. Die Befestigungsvorrichtung 1 kann beliebig oft an dem Verankerungselement 17 befestigt bzw. wieder davon gelöst werden.

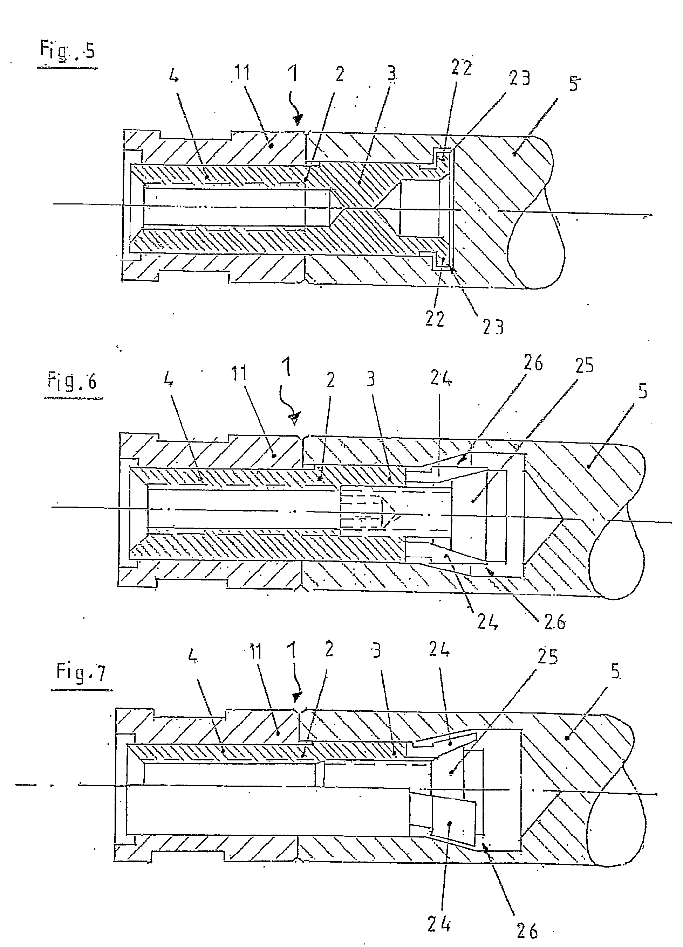

In Fig. 5 ist eine andere Ausgestaltung der Befestigungsvorrichtung 1 schematisch dargestellt. Anstelle eines radial vorspringenden Federrings 6 weist das Kopfteil 3 des Zugbolzens 2 eine durch Kaltverformung herstellbare, radial vorspringende wulstförmige Ausformung 22 auf. Die wulstförmige Ausformung 22 steht mit einer daran angepassten ringförmigen Ausnehmung 23 in Eingriff. Die durch einen kaltverformenden Herstellungsvorgang erzeugte wulstförmige Ausformung 22 bewirkt eine dauerhafte, unlösbare Festlegung des Zugbolzens 2 in dem Funktionselement 5, die eine besonders hohe mechanische Belastbarkeit aufweist.

In den Fig. 6 und 7 ist ein weiteres Ausführungsbeispiel der Befestigungsvorrichtung 1 dargestellt, wobei der Zugbolzen 2 an einem dem Funktionselement 5 zugewandten Endbereich des Kopfteils 3 konzentrisch angeordnete, zungenförmig ausgestaltete Ausformungen 24 aufweist, die mittels eines mittig angeordneten Konus 25 aus einer Ausgangsstellung, in der der Zugbolzen 2 mit dem Konus 25 in das Funktionselement 5 eingeführt werden kann (Fig. 6) in eine radial nach außen vorspringende Endstellung verbogen werden können (Fig. 7) in dem der Konus 25 in Richtung des Schafts 4 des Zugbolzens 2 verlagert wird und die Ausformungen 24 nach außen wegdrückt. Das Funktionselement 5 weist eine daran angepasste, im Bereich der Ausformungen 24 sich erweiternde Ausnehmung 26 zur Aufnahme des Kopfteils 3 des Zugbolzens 2 in dem Funktionselement 5 auf. Bei Bedarf kann das Funktionselement 5 durch eine geeignete Verlagerung des Konus 25 von dem Zugbolzen 2 gelöst bzw. erneut daran befestigt werden.

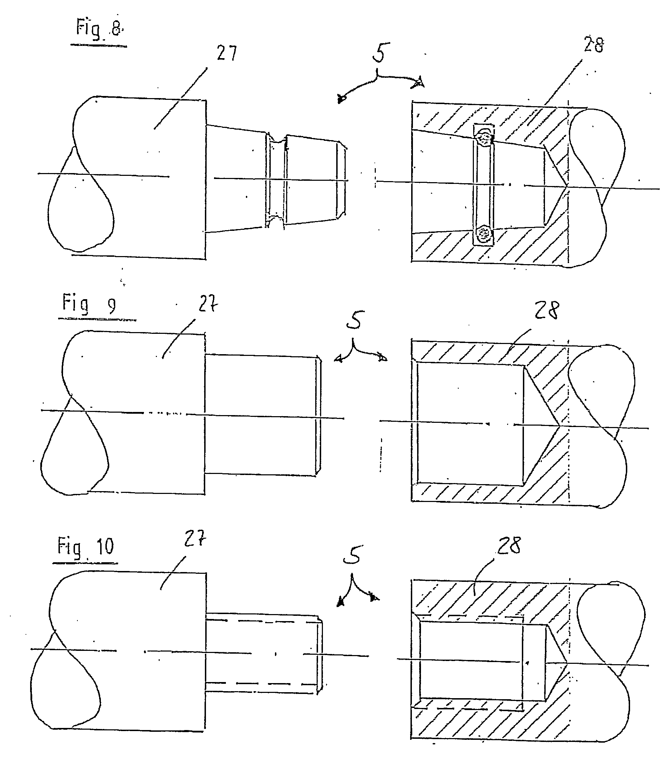

In den Fig. 8, 9 und 10 sind lediglich exemplarisch verschiedene Ausgestaltungen des Funktionselements 5 bestehend aus einem Kupplungsteil 27 und einem damit verbindbaren Funktions-Grundkörper 28 jeweils in auseinandergezogener Darstellung schematisch dargestellt. Der Funktions-Grundkörper 28 kann mit dem Kupplungsteil 27 rastend (Fig. 8), kraftschlüssig (Fig. 9) oder formschlüssig (Fig. 10) verbunden werden.

Der Funktions-Grundkörper 28, von dem in den Figuren lediglich ein dem in diesen Figuren nicht dargestellter Zugbolzen 2 bzw. ein dem Kupplungsteil 27 zugewandte Endbereich dargestellt ist, kann beispielsweise ein Möbelgriff, ein an mehreren Punkten befestigbarer Haltegriff einer Badarmatur, ein Handtuchhalter oder aber beispielsweise auch ein Haken für schwere Lasten wie beispielsweise Betonfertigteile oder dergleichen sein.

Die Befestigungsvorrichtung 1 eignet sich zur Befestigung von nahezu beliebigen Funktionselementen 5 an einer Wand 18, einer Platte oder einem nahezu beliebigen Befestigungspunkt mit einem Verankerungselement. Von besonderem Vorteil ist dabei, dass das zu befestigende Funktionselement 5 nicht notwendigerweise um die Drehachse 8 der Befestigungsvorrichtung 1 verschwenkt oder verdreht werden muss, so dass auch beispielsweise U-förmige Handtuchhalter oder Griffe an beiden der Wand 18 zugewandten Schenkelenden mit jeweils einer Befestigungsvorrichtung 1 an der Wand 18 befestigbar sind.

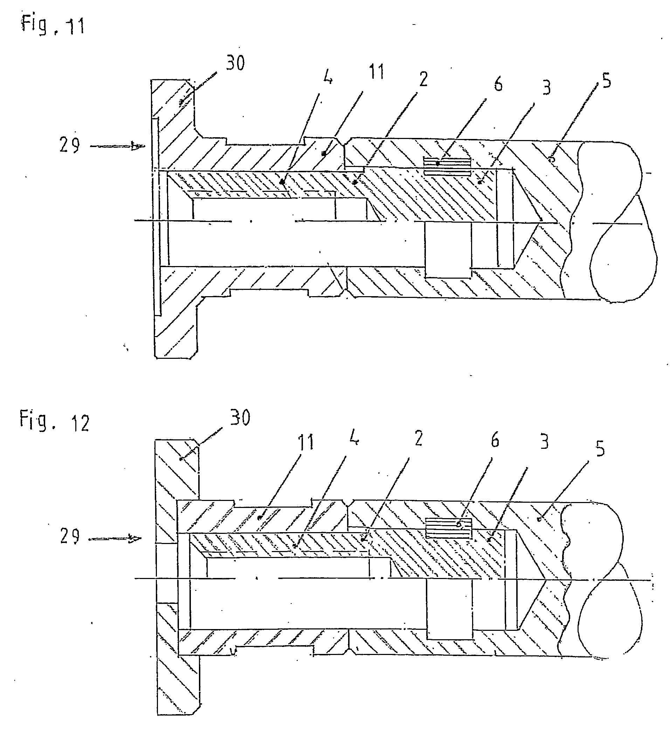

Um beispielsweise bei einer leicht unebenen Wandaußenfläche 21 oder einer nicht ausreichend formstabilen Wand 18 eine zuverlässige Festlegung der Befestigungsvorrichtung 1 an dem Verankerungselement 17 bzw. an der Wandaußenfläche 21 zu ermöglichen, kann vorgesehen sein, dass die Montagehülse 11 an einem dem Funktionselement 5 abgewandten Endbereich 29 einen einstückig mit der Montagehülse 11 an der Montagehülse 11 ausgeformten Anschlagsflansch 30 aufweist (Fig. 11). Der Anschlagsflansch 30 kann auch getrennt hergestellt sein und lediglich im Bedarfsfall auf den Endbereich 29 der Montagehülse 11 aufgesteckt werden bzw. vor dem Anschrauben der Befestigungsvorrichtung 1 an dem Gewindestab 19 des Verankerungselement 17 aufgeschoben und zwischen der Montagehülse 11 und der Wandaußenfläche 21 der Wand 18 angeordnet werden (Fig. 12).

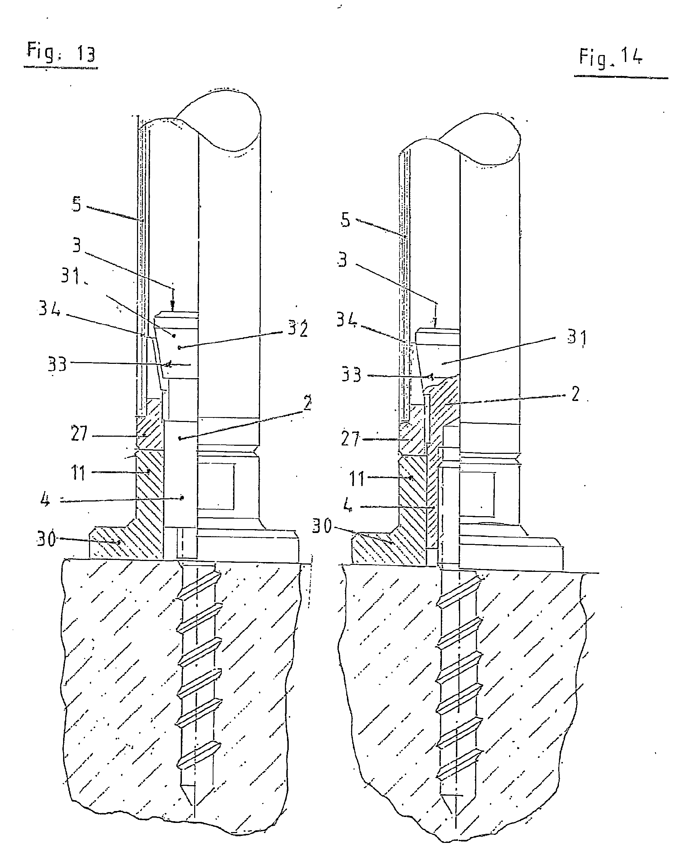

Bei dem in den Fig. 13 und Fig. 14 abgebildeten Ausführungsbeispiel weist das Kopfteil 3 des Zugbolzens 2 einen sich radial erweiternden Abschnitt 31 mit einer konischen Anschlagsfläche 32 aufweist, die mit einer daran angepassten konischen Anschlagsfläche 33 des Kupplungsteils 27 in Wirkverbindung bringbar ist. Die Wirkverbindung kann durch Anpressen der beiden schräg verlaufenden Anschlagsflächen 32 und 33 aufeinander oder im Falle von rastenden Vorsprüngen auf den Anschlagsflächen zusätzlich oder stattdessen durch einen formschlüssigen Eingriff bewirkt werden.

Bei dem in den Fig. 13 und 14 abgebildeten Ausführungsbeispiel weist das Funktionselement 5 einen hülsen- oder rohrförmigen Endabschnitt 34 auf, der auf das Kupplungsteil 27 aufgeschoben werden kann. Mit dem Aufschrauben des Zugbolzens 2 auf den Gewindestab 19 des Verankerungselements 17 wird nicht nur die Befestigungsvorrichtung 1 an dem Verankerungselement 17 festgelegt, sondern gleichzeitig auch das Funktionselement 5 an dem Kupplungsteil 27 und damit an der Befestigungsvorrichtung 1 festgelegt. Zusätzliche Befestigungselemente oder Montageschritte sind nicht erforderlich.

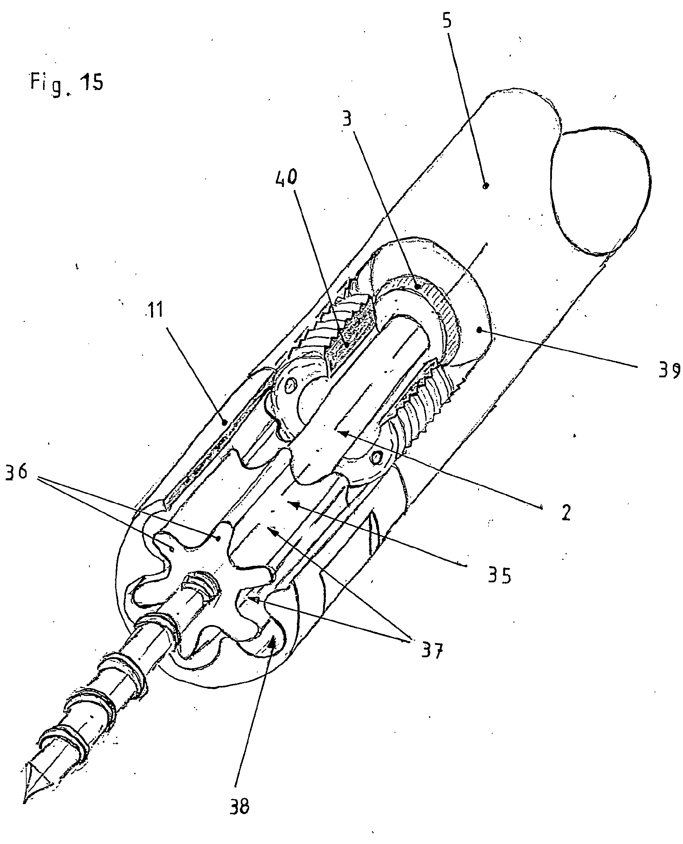

In Fig. 15 ist ein Zugbolzen 2 dargestellt, dessen Schaft 4 einen Abschnitt 35 mit einer im Wesentlichen sternförmigen Querschnittsfläche mit mehreren radial vorspringenden Längsstegen 36 und radial nach innen ragenden Längsnuten 37 aufweist. Die Montagehülse 11 weist eine daran angepasste Formgebung auf, wobei der Abschnitt 35 des Schafts 4 des Zugbolzens 2 den von der Montagehülse 11 gebildeten Hohlraum 38 nicht vollständig ausfüllt, sondern mit einem Spiel darin gelagert ist und in radialer Richtung etwas bewegt werden kann. Auf diese Weise wird ein drehfester Eingriff zwischen der Montagehülse 11 und dem Schaft 4 des Zugbolzens 2 bewirkt und gleichzeitig eine geringfügige seitliche, bzw. radiale Verlagerung des Zugbolzens 2 in dem Hohlraum 38 der Montagehülse 11 und in einer im Wesentlichen zylinderförmigen Ausnehmung 39 in dem Funktionselement 5 ermöglicht.

Das radial vorspringende Kopfteil 3 des Zugbolzens 2 ist über ein hohlzylinderförmiges Rückhalteelement 40 in der zylinderförmigen Ausnehmung 39 des Funktionselements 5 festgelegt. Das hohlzylinderförmige Rückhalteelement 40 ist hinsichtlicher der äußeren Abmessungen an die zylinderförmige Ausnehmung 39 in dem Funktionselement 5 angepasst und über einen Gewindeeingriff in dieser Ausnehmung 39 festgelegt. Die inneren Abmessungen des Rückhalteelements 40 sind an die Abmessungen des Kopfteils 3 und des Schafts 4 des Zugbolzens 2 angepasst und verhindern eine axiale Verlagerung des Zugbolzens 2 innerhalb der Ausnehmung 39, während gleichzeitig eine Rotation des Funktionselements 5 um das Kopfteil 3 des Zugbolzens 2 ermöglicht wird. Durch das nachträglich, bzw. lösbar in der Ausnehmung 39 festlegbare Rückhalteelement 40 kann in einfacher und kostengünstiger Weise das Funktionselement 5 mit dem Zugbolzen 2 erfindungsgemäß verbunden werden.

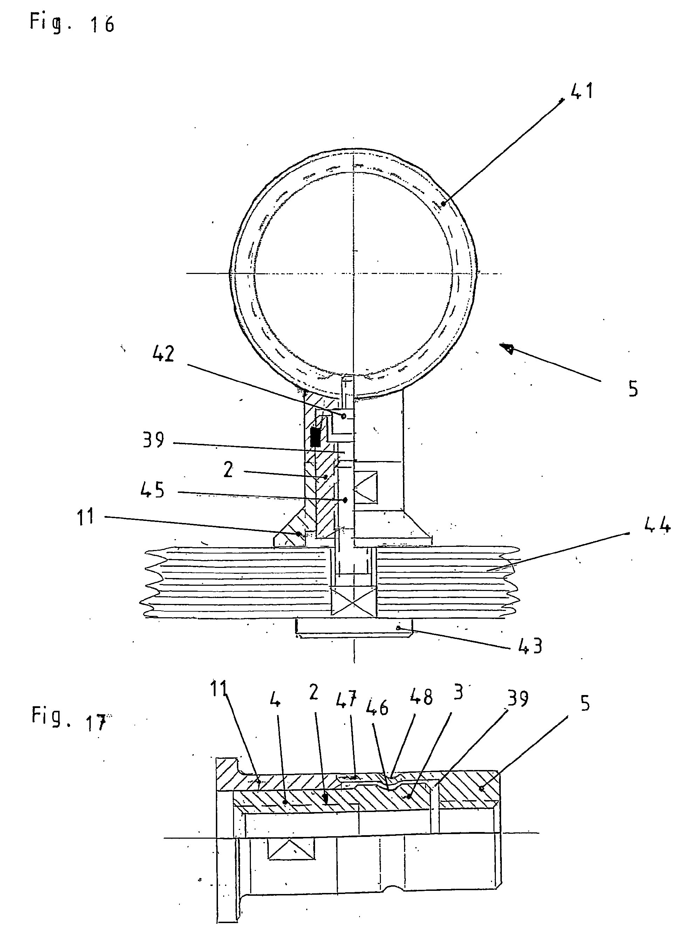

Bei dem in Fig. 16 exemplarisch dargestellten Ausführungsbeispiel weist das Funktionselement ein ringförmiges Aufnahmeelement 41 für eine Stange oder einen Stab oder dergleichen auf. Die Stange oder der Stab können über eine Zylinderkopfschraube 42 in dem Aufnahmelement 41 fixiert werden, die über die Ausnehmung 39 in dem Funktionselement 5 zugänglich ist.

Bei dem in Fig. 16 gezeigten Ausführungsbeispiel ist das Verankerungselement keine Stockschraube, sondern ein Gewindebolzen 43, der rückseitig an einem Brett 44 festgelegt ist und dessen Gewindeabschnitt 45 durch eine Bohrung in dem Brett 44 herausragt und mit dem Zugbolzen 2 in Eingriff steht.

Bei dem in Fig. 17 dargestellten Ausführungsbeispiel weist der Zugbolzen 2 im Bereich des Kopfteils 3 eine längs eines radialen Umfangs umlaufende Nut 46 auf. Das Funktionselement 5 weist zunächst einen hülsenförmigen Befestigungsabschnitt 47 auf, der die zylinderförmige Ausnehmung 39 umgibt. Nachdem der Zugbolzen 2 in die Ausnehmung 39 eingeführt wurde, kann durch Krafteinwirkung eine an die Nut 46 angepasste Verformung in dem hülsenförmigen Befestigungsabschnitt 47 herbeigeführt werden und eine sickenartige Einschnürung 48 erzeugt werden, die das Funktionselement 5 dauerhaft und unlösbar, gleichzeitig jedoch drehbar und in axialer Richtung formschlüssig mit dem Zugbolzen 2 verbindet.

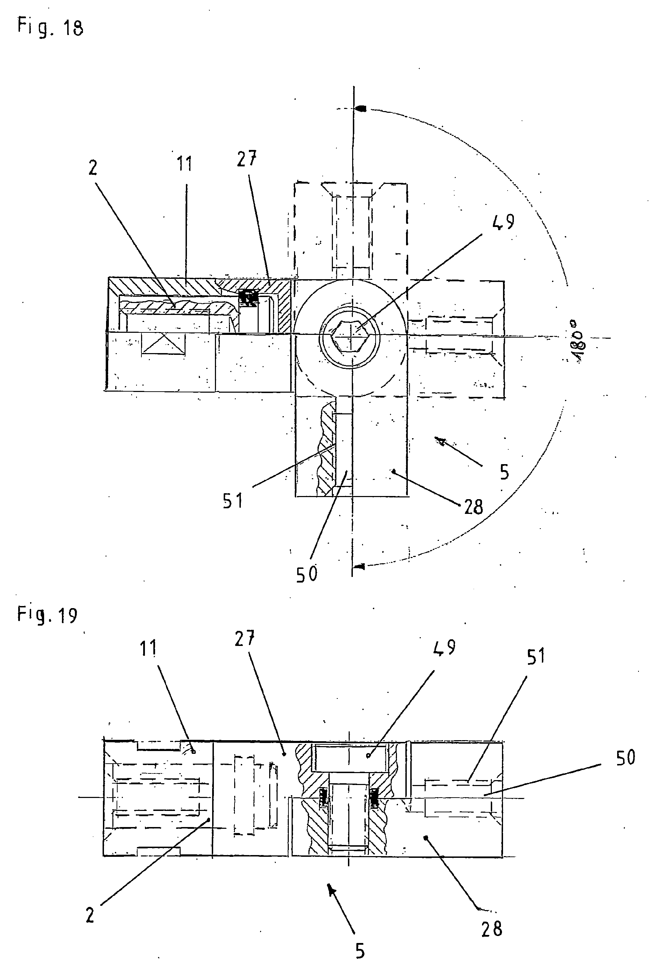

In den Fig. 18 und 19 ist ein Funktionselement 5 abgebildet, bei dem der Funktions-Grundkörper 28 schwenkbar an dem Kupplungsteil 27 gelagert ist. Der Funktions-Grundkörper 28 ist über einen Schraubbolzen 49 schwenkbar an dem Kupplungsteil 27 festgelegt. In Fig. 18 sind exemplarisch drei verschiedene Stellungen des Funktions-Grundkörpers 28 relativ zu dem Kupplungsteil 27 abgebildet. Der Funktions-Grundkörper 28 weist eine Sackbohrung 50 mit einem Gewinde 51 auf, so dass an dem Funktions-Grundkörper 28 beliebige weitere Elemente oder Funktionsteile festlegbar bzw. befestigbar sind.

Es ist ebenfalls denkbar, dass die Sackbohrung 50 des Funktions-Grundkörpers 28 als Verankerungselement für ein weiteres Funktionselement mit einer weiteren Befestigungsvorrichtung dienen kann.

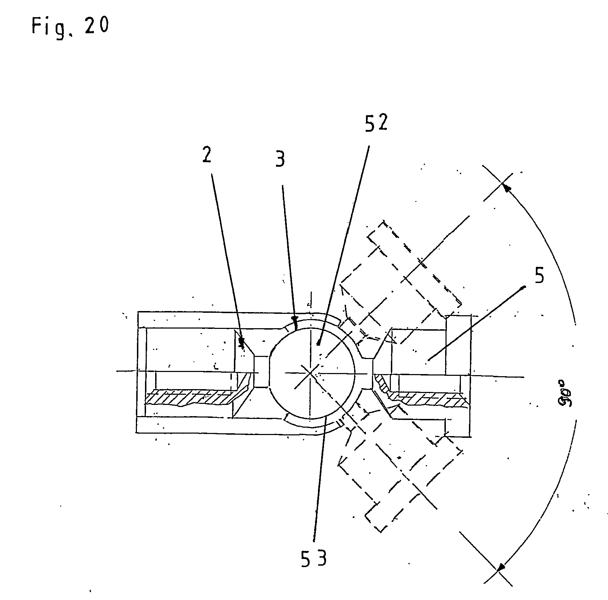

Bei dem in der Fig. 20 dargestellten Ausführungsbeispiel weist der Kopfteil 3 des Zugbolzens 2 eine Gelenkkugel 52 näherungsweise kugelförmige Formgebung auf und das Funktionselement 5 weist eine daran angepasste Gelenkpfanne 53 auf, so dass das Funktionselement 5 innerhalb eines konstruktionsbedingt vorgegebenen Raumwinkels in alle Raumrichtungen um den Zugbolzen 2 verschwenkt werden kann und eine axiale Verlagerung verhindert wird.

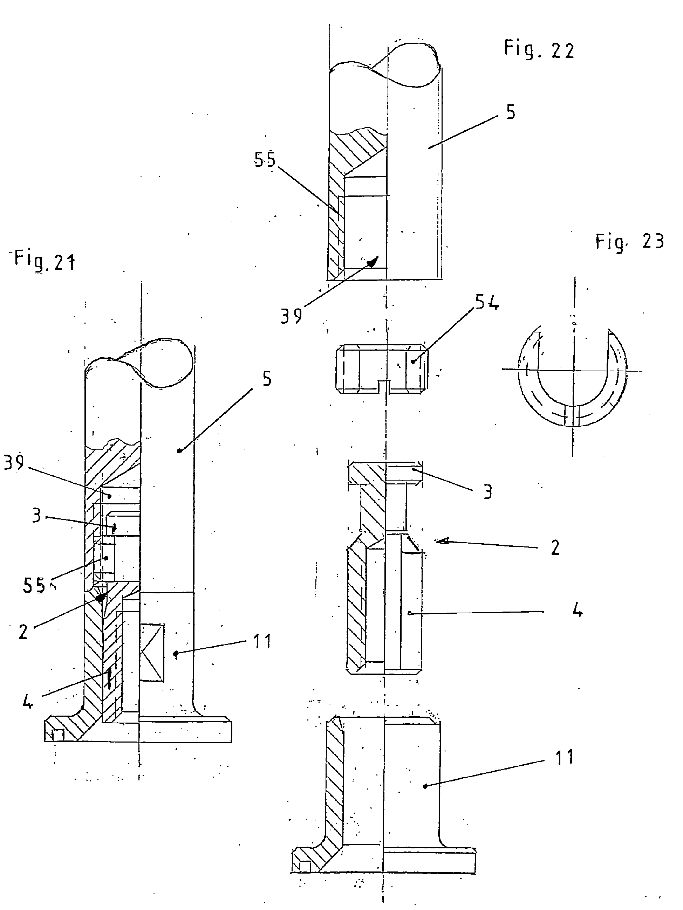

In den Fig. 21, 22 und 23 wird nochmals eine andere Ausführungsform eines Funktionselements 5 mit einer zylinderförmigen Ausnehmung 39 dargestellt, in der der Zugbolzen 2 mit dem radial vorspringenden Kopfteil 3 durch ein C-förmig ausgestaltetes Rückhalteelement 54 festgelegt wird. Das C-förmig ausgestaltete Rückhalteelement 54 wird über einen Gewindeeingriff innerhalb eines Gewindeabschnitts 55 in der Ausnehmung 39 festgelegt.

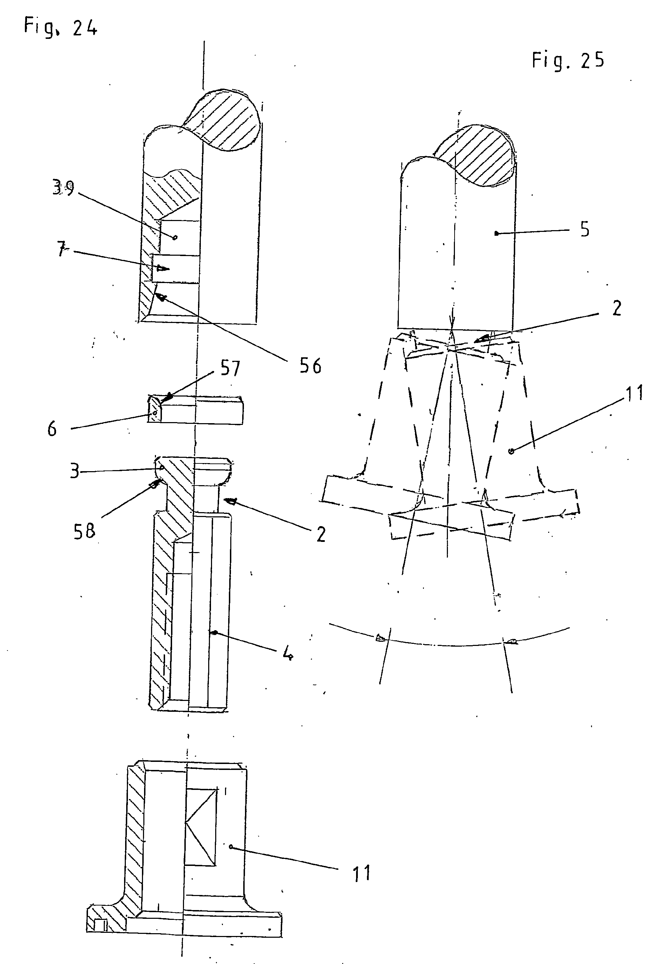

Bei der in den Fig. 24 und 25 dargestellten Variante weist die Ausnehmung 39 einen sich konusförmig in Richtung des Zugbolzens 2 erweiternden Abschnitt 56 auf. Der Federring 6 und das Kopfteil 3 des Zugbolzens 2 weisen konvex gekrümmte Oberflächenbereiche 57 bzw. 58 auf. Der Zugbolzen 2 kann auf Grund der sich aufweitenden Ausnehmung 39 geringfügig um eine Mittenachse 59 verschwenkt werden, um beispielsweise eine geringfügige Schrägstellung eines Verankerungselements relativ zu der vorgesehenen Ausrichtung des Funktionselements 5 ausgleichen zu können.

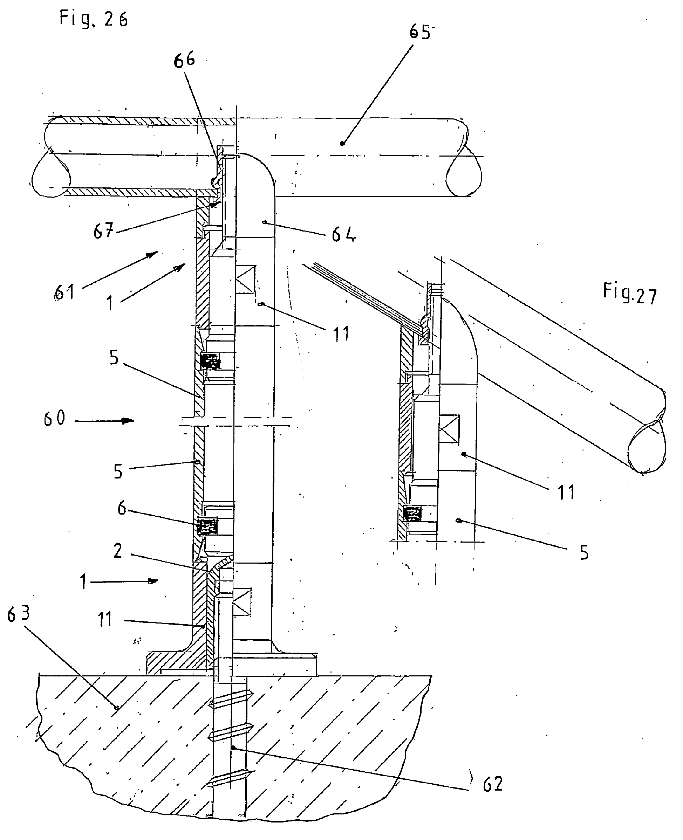

In den Fig. 26 und 27 wird exemplarisch dargestellt, wie ein Funktionselement 5 mit jeweils einer Befestigungsvorrichtung 1 an beiden Enden zu einem Geländerpfosten 60 eines Geländers 61 zusammengefügt und kombiniert werden kann. Das Funktionselement 5 wird mit einer ersten Befestigungsvorrichtung 1 über eine Stockschraube 62 mit einem Untergrund 63 verbunden. Mit einer zweiten Befestigungsvorrichtung 1 wird das säulenförmig ausgestaltete Funktionselement 5 über ein Anschlagselement 64 mit einem Handlauf 65 des Geländers 61 verbunden. Das Anschlagselement 64 ist über eine Einnietmutter 66 in einer Öffnung 67 in dem Handlauf 65 festgelegt.

Durch eine geeignete Formgebung des Anschlagselements 64 kann ein beliebiger Winkel zwischen dem Handlauf 65 des Geländers 61 und dem Geländerpfosten 60 vorgegeben, bzw. ausgeglichen werden und gleichzeitig unabhängig von der Formgebung des Handlaufs 65 eine ebene Anschlagsfläche für die zugeordnete Befestigungsvorrichtung 1 bzw. die Montagehülse 11 bereitgestellt werden (Fig. 27).

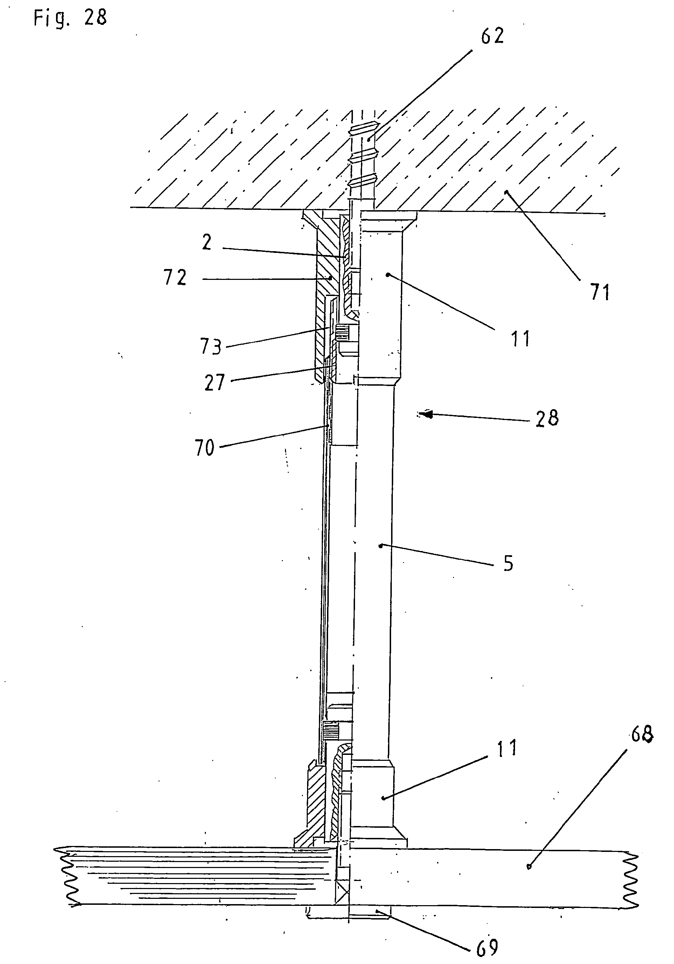

In Fig. 28 wird eine ähnliche Konstruktion wie in den Fig. 26 und 27 exemplarisch abgebildet, die beispielsweise als Abhängevorrichtung für eine Ablagefläche, ein Regalbrett oder dergleichen verwendet werden kann, die jeweils von einer Decke oder von einem darüber angeordneten Möbelteil abgehängt werden können. Ein mittig angeordnetes Funktionselement 5 ist über eine Befestigungsvorrichtung 1 mit einer abgehängten Ablageplatte 68 verbunden, wobei der Zugbolzen 2 der Befestigungsvorrichtung 1 mit einer Befestigungsschraube 69 in Eingriff steht, die von einer von der Befestigungsvorrichtung 1 abgewandten Seite aus durch die Ablageplatte 68 hindurchragt und dort festgelegt ist.

An einem der Ablageplatte 68 entgegengesetzten Ende bildet das Funktionselement 5 einen Funktions-Grundkörper 28 mit einem hülsenförmigen Befestigungsabschnitt 70, der mit dem Kupplungsteil 27 in Gewindeeingriff steht. Das Kupplungsteil 27 ist über eine weitere Befestigungseinrichtung 1 an einer Stockschraube 62 festgelegt, die in eine Decke 71 eingeschraubt ist.

Durch ein Verdrehen des Funktionselements 5 bzw. des Funktions-Grundkörpers 28 relativ zu dem Kupplungsteil 27 kann der Abstand zwischen dem Funktions-Grundkörper, bzw. dem Funktionselement 5 und dem Kupplungsteil 27 variiert und innerhalb eines maximalen Verstellbereichs vorgegeben werden.

Um einen optisch ansprechenden Übergang zwischen der oben dargestellten Befestigungsvorrichtung 1 und dem Funktionselement 5 zu ermöglichen weist die Montagehülse 11 an ihrem dem Funktionselement 5 zugewandten Ende eine hohlzylinderförmige Blende 72 auf, die einen Übergangsbereich der Befestigungsvorrichtung 1 bis hin zu dem rohrförmig ausgestalteten Funktionselement 5 überlappt und abdeckt. Ein Spalt bzw. Übergang zwischen dem Funktions-Grundkörper 28 und dem Kupplungsteil 27 bzw. eine je nach Einstellung des Funktions-Grundkörpers 28 relativ zu der Befestigungsvorrichtung 1 unterschiedlich große Lücke 73 wird durch die Blende 72 in optisch ansprechender Weise überdeckt.

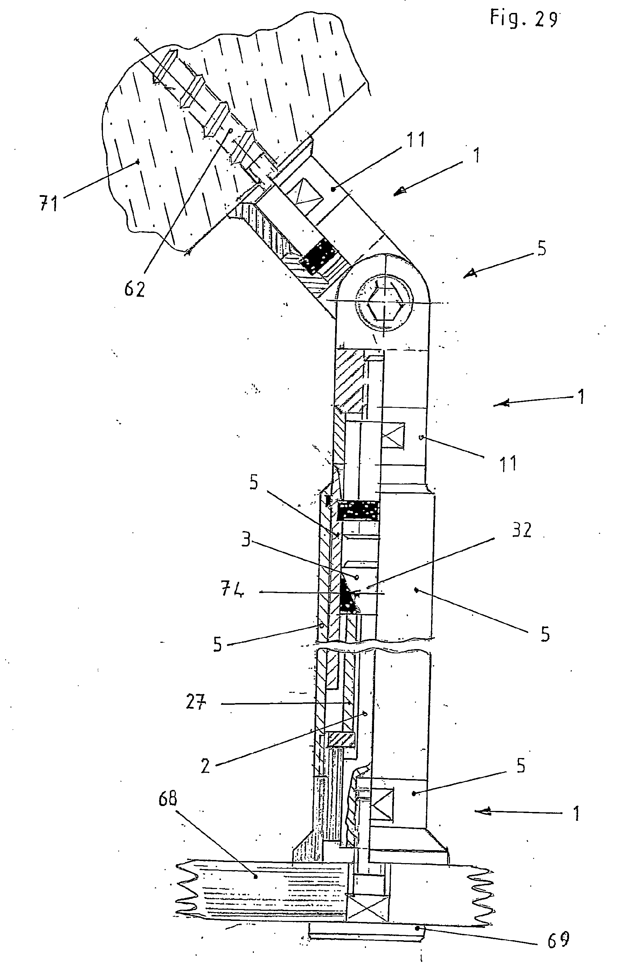

Das in der Fig. 29 dargestellte Ausführungsbeispiel ist ähnlich zu dem in der Fig. 28 beschriebenen Ausführungsbeispiel. Zwischen zwei mittig angeordneten und sich überlappenden rohrförmigen Funktionselementen 5 und der schräg verlaufenden Decke 71 ist ein weiteres Funktionselement 5 mit einer weiteren Befestigungsvorrichtung 1 angeordnet, um über ein Schwenkgelenk, wie es in den Fig. 18 und 19 exemplarisch dargestellt ist, einen Winkel zwischen der schrägen Decke 71 und der Ablageplatte 68 zu ermöglichen.

Die zwischen der Ablageplatte 68 und dem Schwenkgelenk angeordneten, jeweils hohlzylinderförmig ausgestalteten Funktionselemente 5 weisen ebenfalls eine Längenverstelleinrichtung auf. Abweichend zu dem in der Fig. 28 dargestellten Ausführungsbeispiel ist das hohlzylinderförmige Funktionselement 5, das der in der Abbildung oben dargestellten Befestigungsvorrichtung 1 zugeordnet ist, nicht über einen Gewindeeingriff mit dem weiteren hohlzylinderförmigen Funktionselement 5 verbunden. Die beiden Funktionselemente 5 weisen einen unterschiedlichen Durchmesser auf und sind als Innenrohr und als Außenrohr ausgestaltet. Die beiden Funktionselemente 5, bzw. das Außenrohr und das Innenrohr können relativ zueinander ineinander verschoben werden. Das Kopfteil 3 des Zugbolzens 2 weist eine konische Anschlagsfläche 32 auf, die mit einer daran angepassten Anschlagsfläche 74 des Kupplungsteils 27 in Wirkverbindung steht. Wenn der Zugbolzen 2 durch Verdrehen der Montagehülse 11 an der Befestigungsschraube 69 festgelegt und Zugkräfte erzeugt werden, wird über die Wirkverbindung der konischen Anschlagsfläche 32, 74 ein Ende des Kupplungsteils 27 im Bereich der Anschlagsfläche 74 radial nach außen gepresst und drückt die beiden ineinandergeschobenen hohlzylinderförmigen Abschnitte der Funktionselemente 5 gegeneinander, so dass die beiden Funktionselemente 5 in der vorgegebenen Anordnung relativ zueinander klemmend festgelegt werden. Mit derart ausgebildeten Funktionselementen 5 kann eine individuelle Längenanpassung von zwei miteinander verbundenen, hinsichtlich ihrer Länge jeweils vorkonfektionierten Funktionselemente 5 äußerst montagefreundlich vorgenommen werden. Ein händisches Ablängen oder Anpassen einzelner Funktionselemente 5 während einer Montage vor Ort ist nicht erforderlich.

## Patentansprüche

1. Funktionselement (5) mit einer Befestigungsvorrichtung (1) zur lösbaren Befestigung des Funktionselements (5) an einem ein Gewinde aufweisendes Verankerungselement (17), wobei die Befestigungsvorrichtung (1) einen mit dem Gewinde des Verankerungselements (17) in Eingriff bringbaren Zugbolzen (2) mit einem Schaft (4) und mit einem Kopfteil (3) aufweist, wobei das Funktionselement (5) drehbar an dem Kopfteil (3) des Zugbolzens (2) gelagert ist und dass das Kopfteil (3) des Zugbolzens (2) in axialer Richtung formschlüssig mit dem Funktionselement (5) in Eingriff bringbar ist, **dadurch gekennzeichnet, dass** die Befestigungsvorrichtung (1) eine drehfest an dem Schaft (4) des Zugbolzens (2) gelagerte Montagehülse (11) aufweist.

2. Funktionselement nach Anspruch 1, **dadurch gekennzeichnet, dass** die Montagehülse (11) in axialer Richtung länger als ein aus dem Funktionselement (5) herausragender Abschnitt des Schafts (4) des Zugbolzens (2) ist.

3. Funktionselement nach Anspruch 1 oder Anspruch 2, **dadurch gekennzeichnet, dass** die Montagehülse (11) mindestens eine in radialer Richtung zum Schaft hin vorspringende Ausformung aufweist und dass der Schaft (4) mindestens eine an die vorspringende Ausformung der Montagehülse (11) angepasste Ausnehmung aufweist.

4. Funktionselement nach einem der vorangehenden Ansprüche, **dadurch gekennzeichnet, dass** das Kopfteil (3) des Zugbolzens (2) einen in Umfangsrichtung verlaufenden, radial vorspringenden Federring (6) und das Funktionselement (5) eine daran angepasste ringförmige Nut (7) aufweist.

5. Funktionselement nach einem der vorangehenden Ansprüche 1 bis 4, **dadurch gekennzeichnet, dass** das Kopfteil (3) des Zugbolzens (2) eine in Umfangsrichtung verlaufende, radial vorspringende Ausformung (22) und das Funktionselement (5) eine daran angepasste ringförmige Nut (7) oder eine daran angepasste Ausnehmung aufweist.

6. Funktionselement nach einem der vorangehenden Ansprüche, **dadurch gekennzeichnet, dass** das Funktionselement (5) eine im Wesentlichen zylinderförmige Ausnehmung (39) zur Aufnahme des Kopfteils (3) des Zugbolzens (2) aufweist und ein radial vorspringender Bereich des Kopfteils (3) des Zugbolzens (2) mit einem nachträglich in der zylinderförmigen Ausnehmung (39) festlegbaren, hülsenförmigen Rückhalteelement (40) in Eingriff bringbar ist.

7. Funktionselement nach einem der vorangehenden Ansprüche, **dadurch gekennzeichnet, dass** das Funktionselement eine Ausnehmung (39) mit einer sich zum Schaft (4) des Zugbolzens (2) hin erweiternden Querschnittsfläche zur Aufnahme des Zugbolzens (2) aufweist.

8. Funktionselement nach einem der vorangehenden Ansprüche, **dadurch gekennzeichnet, dass** das Funktionselement (5) ein mit dem Zugbolzen (2) in Eingriff bringbares Kupplungsteil (27) und einen mit dem Kupplungsteil (27) verbindbaren Funktions-Grundkörper (28) aufweist.

9. Funktionselement nach Anspruch 8, **dadurch gekennzeichnet, dass** der Funktions-Grundkörper (28) schwenkbar an dem Kupplungsteil (27) gelagert ist.

10. Funktionselement nach Anspruch 8 oder Anspruch 9, **dadurch gekennzeichnet, dass** der Funktions-Grundkörper (28) in axialer Richtung relativ zu dem Kupplungsteil (27) verlagerbar ist.

11. Funktionselement nach Anspruch 10, **dadurch gekennzeichnet, dass** der Funktions-Grundkörper (28) klemmend an dem Kupplungsteil (27) festlegbar ist.

12. Funktionselement nach einem der vorangehenden Ansprüche, **dadurch gekennzeichnet, dass** die Befestigungsvorrichtung (1) an einem dem Funktionselement (5) abgewandten Endbereich (29) ein Anschlagselement aufweist.

13. Funktionselement nach Anspruch 12, **dadurch gekennzeichnet, dass** das Anschlagselement einen radial vorspringenden Anschlagsflansch (30) aufweist.

14. Funktionselement nach einem der vorangehenden Ansprüche, **dadurch gekennzeichnet, dass** das Kopfteil (3) des Zugbolzens (2) einen sich radial erweiternden Abschnitt (31) mit einer konischen Anschlagsfläche (32) aufweist, die mit einer daran angepassten konischen Anschlagsfläche des Funktionselements (5) in Wirkverbindung bringbar ist.

## Claims

1. Functional element (5) with a fastening device (1) for releasably fastening the functional element (5) on an anchoring element (17) having a thread, wherein the fastening device (1) has a tension bolt (2) with a shaft (4) and with a head part (3), which tension bolt can be brought into engagement with the thread of the anchoring element (17), wherein the functional element (5) is mounted rotatably on the head part (3) of the tension bolt (2) and wherein the head part (3) of the tension bolt (2) can be brought positively into engagement with the functional element (5) in the axial direction, **characterized in that** the fastening device (1) has a mounting sleeve (11) mounted in a rotationally fixed manner on the shaft (4) of the tension bolt (2).

2. Functional element according to Claim 1, **characterized in that** the mounting sleeve (11) is longer in the axial direction than a portion, which projects from the functional element (5), of the shaft (4) of the tension bolt (2).

3. Functional element according to Claim 1 or 2, **characterized in that** the mounting sleeve (11) has at least one formation which projects towards the shaft in the radial direction and **in that** the shaft (4) has at least one recess adapted to the projecting formation of the mounting sleeve (11).

4. Functional element according to one of the preceding claims, **characterized in that** the head part (3) of the tension bolt (2) has a radially projecting spring ring (6) extending in the circumferential direction and the functional element (5) has an annular groove (7) adapted thereto.

5. Functional element according to one of the preceding Claims 1 to 4, **characterized in that** the head part (3) of the tension bolt (2) has a radially projecting formation (22) extending in the circumferential direction and the functional element (5) has an annular groove (7) adapted thereto or a recess adapted thereto.

6. Functional element according to one of the preceding claims, **characterized in that** the functional element (5) has a substantially cylindrical recess (39) for receiving the head part (3) of the tension bolt (2), and a radially projecting region of the head part (3) of the tension bolt (2) can be brought into engagement with a sleeve-like retaining element (40) which can be fixed subsequently in the cylindrical recess (39).

7. Functional element according to one of the preceding claims, **characterized in that** the functional element has a recess (39) with a cross-sectional area for receiving the tension bolt (2) that widens towards the shaft (4) of the tension bolt (2).

8. Functional element according to one of the preceding claims, **characterized in that** the functional element (5) has a coupling part (27) which can be brought into engagement with the tension bolt (2) and a functional basic body (28) which can be connected to the coupling part (27).

9. Functional element according to Claim 8, **characterized in that** the functional basic body (28) is pivotably mounted on the coupling part (27).

10. Functional element according to Claim 8 or Claim 9, **characterized in that** the functional basic body (28) is displaceable in the axial direction relative to the coupling part (27).

11. Functional element according to Claim 10, **characterized in that** the functional basic body (28) can be fixed on the coupling part (27) with a clamping action.

12. Functional element according to one of the preceding claims, **characterized in that** the fastening device (1) has a stop element at an end region (29) facing away from the functional element (5).

13. Functional element according to Claim 12, **characterized in that** the stop element has a radially projecting stop flange (30).

14. Functional element according to one of the preceding claims, **characterized in that** the head part (3) of the tension bolt (2) has a radially widening portion (31) with a conical stop surface (32) which can be brought into operative connection with a conical stop surface of the functional element (5) that is adapted thereto.

## Revendications

1. Élément fonctionnel (5) doté d'un dispositif de fixation (1) destiné à la fixation amovible de l'élément fonctionnel (5) à un élément d'ancrage (17) comportant un filet, le dispositif de fixation (1) comportant un boulon tirant (2) pouvant être amené en prise avec le filet de l'élément d'ancrage (17), avec une tige (4) et avec une partie de tête (3), l'élément fonctionnel (5) étant disposé de façon à pouvoir tourner au niveau de la partie de tête (3) du boulon tirant (2) et la partie de tête (3) du boulon tirant (2) pouvant être amenée en prise par complémentarité de formes avec l'élément fonctionnel (5) dans la direction axiale, **caractérisé en ce que** le dispositif de fixation (1) comporte une douille de montage (11) disposée solidairement en rotation au niveau de la tige (4) du boulon tirant (2).

2. Élément fonctionnel selon la revendication 1, **caractérisé en ce que** la douille de montage (11) est plus longue dans la direction axiale qu'une section de la tige (4) du boulon tirant (2) saillant hors de l'élément fonctionnel (5).

3. Élément fonctionnel selon la revendication 1 ou 2, **caractérisé en ce que** la douille de montage (11) comporte au moins une saillie saillant dans la direction radiale vers la tige et que la tige (4) comporte au moins un évidement adapté à la saillie saillante de la douille de montage (11).

4. Élément fonctionnel selon l'une quelconque des revendications précédentes, **caractérisé en ce que** la partie de tête (3) du boulon tirant (2) comporte une bague sur ressort (6) saillant dans le plan radial s'étendant dans la direction périphérique et que l'élément fonctionnel (5) comporte une rainure (7) de forme annulaire s'y adaptant.

5. Élément fonctionnel selon l'une quelconque des revendications précédentes 1 à 4, **caractérisé en ce que** la partie de tête (3) du boulon tirant (2) comporte une saillie (22) saillant dans le plan radial s'étendant dans la direction périphérique et que l'élément fonctionnel (5) comporte une rainure (7) de forme annulaire s'y adaptant ou un évidement s'y adaptant.

6. Élément fonctionnel selon l'une quelconque des revendications précédentes, **caractérisé en ce que** l'élément fonctionnel (5) comporte un évidement (39) pour l'essentiel en forme de cylindre permettant de recevoir la partie de tête (3) du boulon tirant (2) et qu'une zone saillant dans le plan radial de la partie de tête (3) du boulon tirant (2) peut être amenée en prise avec un élément de retenue (40) en forme de douille pouvant être fixé ultérieurement dans l'évidement (39) en forme de cylindre.

7. Élément fonctionnel selon l'une quelconque des revendications précédentes, **caractérisé en ce que** l'élément fonctionnel comporte un évidement (39) avec une surface de section transversale s'élargissant en direction de la tige (4) du boulon tirant (2) pour recevoir le boulon tirant (2).

8. Élément fonctionnel selon l'une quelconque des revendications précédentes, **caractérisé en ce que** l'élément fonctionnel (5) comporte une partie d'embrayage (27) pouvant être amenée en prise avec le boulon tirant (2) et un corps de base fonctionnel (28) pouvant être relié à la partie d'embrayage (27).

9. Élément fonctionnel selon la revendication 8, **caractérisé en ce que** le corps de base fonctionnel (28) est disposé de façon à pouvoir pivoter au niveau de la partie d'embrayage (27).

10. Élément fonctionnel selon la revendication 8 ou 9, **caractérisé en ce que** le corps de base fonctionnel (28) peut être déplacé dans la direction axiale par rapport à la partie d'embrayage (27).

11. Élément fonctionnel selon la revendication 10, **caractérisé en ce que** le corps de base fonctionnel (28) peut être fixé par serrage à la partie d'embrayage (27).

12. Élément fonctionnel selon l'une quelconque des revendications précédentes, **caractérisé en ce que** le dispositif de fixation (1) comporte un élément de butée au niveau d'une zone d'extrémité (29) opposée à l'élément fonctionnel (5).

13. Élément fonctionnel selon la revendication 12, **caractérisé en ce que** l'élément de butée comporte un flasque de butée (30) saillant dans le plan radial.

14. Élément fonctionnel selon l'une quelconque des revendications précédentes, **caractérisé en ce que** la partie de tête (3) du boulon tirant (2) comporte une section (31) s'élargissant dans le plan radial avec une surface de butée (32) conique pouvant être amenée en liaison active avec une surface de butée conique s'y adaptant de l'élément fonctionnel (5).
